# EUROPEAN PATENT APPLICATION

(11) **EP 4 653 803 A1**
(43) Date of publication of application: **26.11.2025**
(21) Application number: 24763718.4
(22) Date of filing: 20.02.2024
(51) Int. Cl.: G01B 5/016

(54) **TOUCH PROBE**

(30) Priority: 01.03.2023 JP 2023031328
(71) Applicant: Makino Milling Machine Co., Ltd., Tokyo 152-8578 (JP)
(72) Inventor: KASUYA, Kenji, Tokyo 152-8578 (JP); ENOMOTO, Taichi, Tokyo 152-8578 (JP)
(74) Representative: Harvey, Alexander James
(86) International application number: PCT/JP2024/006056
(87) International publication number: WO 2024/181237

(57) **Abstract**

A touch probe (10), mounted on a measuring device (100), for measuring a dimension of a measurement object by moving relative to the measurement object (W) in a measuring direction (A₁, A₂, A₃), and being brought into contact with the measurement object, is provided with a main body portion (12) mounted on the measuring device, a support shaft (14) provided on the main body portion, and a contact (20) having a spherical outer shape, provided at a tip end of the support shaft, wherein the contact (20) includes a contacting portion (24) which is formed by means of a notched part (22) and which projects in the measuring direction.

## Description

### FIELD

The present invention relates to a touch probe used in a three-dimensional measuring machine or a machine tool to measure dimensions by bringing it to contact with a surface of a workpiece or other object to be measured.

### BACKGROUND

In the field of machine tools, touch probes are widely and commonly used to measure the dimensions of workpieces. For example, Patent Literature 1 discloses a touch probe, having a stylus provided with a spherical contactor, and configured to be attached to the end of the spindle of a machine tool.

### [CITATION LIST]

### [PATENT LITERATURE]

[PTL 1] Japanese Unexamined Patent Publication (Kokai) No. 2019-132848

### SUMMARY

### [TECHNICAL PROBLEM]

The contactor is provided at the distal end of the touch probe, and outputs a touch signal when it comes into contact with the surface of an object to be measured. In general, contactors have spherical shapes, and therefore it is very difficult or impossible to accurately bring a predetermined point of the contactor into contact with a portion narrower than the diameter of the contactor, i.e., a portion where interference unrelated to the contact surface for measurement occurs.

A technical problem of the present invention is to solve these problems of the prior art, and an object of the present invention is to provide a touch probe capable of measuring even when the surface to be measured of a workpiece is narrow.

### [SOLUTION TO PROBLEM]

In order to achieve the object described above, according to the present invention, there is provided a touch probe used for measuring a position or dimension of a measurement object by being attached to a measuring device, moving relative to the measurement object in a measurement direction so as to come into contact with the measurement object, the touch probe comprising a main body configured to be attached to the measuring device, a support shaft provided on the main body, and a contactor in the form of a spherical shape provided at a distal end of the support shaft, wherein the contactor includes an abutment part formed by a notched part to extend in the measurement direction.

### [ADVANTAGEOUS EFFECTS OF INVENTION]

In the touch probe of the present invention, the abutment part that is configured to contact the object to be measured is formed by the notched part of the contactor, so that during measurement, the abutment part can come into contact with the measurement portion of the workpiece without any part of the contactor other than the abutment part interfering with the object to be measured.

### BRIEF DESCRIPTION OF DRAWINGS

Figure 1 is a schematic side view of a touch probe according to a preferred embodiment of the present invention.
Figure 2 is an enlarged view of a contactor of the touch probe shown upside down from Figure 1.
Figure 3 is a side view of a contactor according to a first embodiment.
Figure 4 is a side view of the contactor shown in Figure 3 rotated 90 degrees around the central axis.
Figure 5 is a front view of the contactor according to the first embodiment as viewed from the tip.
Figure 6 is a perspective view of the touch probe shown in Figure 1 as inserted in a tool holder.
Figure 7 is a schematic block diagram of a measuring device for measuring the position or dimension of a workpiece with the touch probe mounted thereto.
Figure 8 is a schematic diagram for explaining a dimensional measurement of a measurement object by a conventional touch probe.
Figure 9 is a schematic diagram for explaining a measurement by the touch probe according to the first embodiment.
Figure 10 is a schematic diagram for explaining another example of the measurement by the touch probe according to the first embodiment.
Figure 11 is a schematic diagram for explaining further another example of the measurement by the touch probe according to the first embodiment.
Figure 12 is a side view of a contactor according to a second embodiment.
Figure 13 is a side view of the contactor shown in Figure 12 rotated 90 degrees around the central axis.
Figure 14 is a front view of the contactor according to the second embodiment as viewed from the tip.
Figure 15 is a schematic side view of a contactor according to a third embodiment.
Figure 16 is a schematic side view of a contactor according to a fourth embodiment.
Figure 17 is a schematic side view of a contactor according to a fifth embodiment.
Figure 18 is a schematic diagram for explaining an example of measuring a plurality of points using the touch probe according to the first embodiment.
Figure 19 is a perspective view of a contactor according to a sixth embodiment.
Figure 20 is a schematic diagram for explaining an example of measurement by the touch probe according to the sixth embodiment.

### DESCRIPTION OF EMBODIMENTS

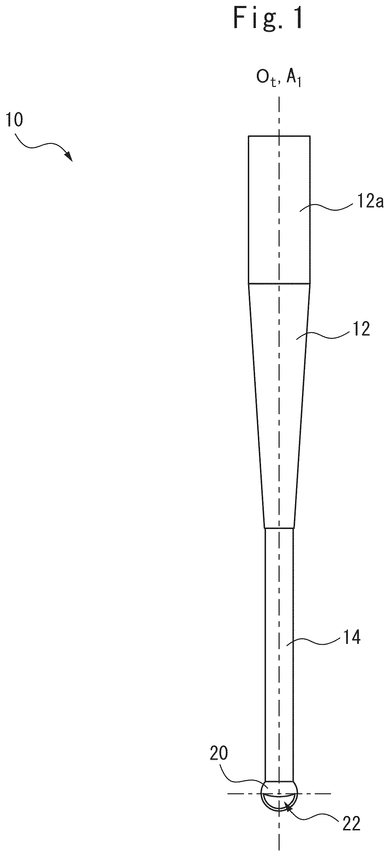

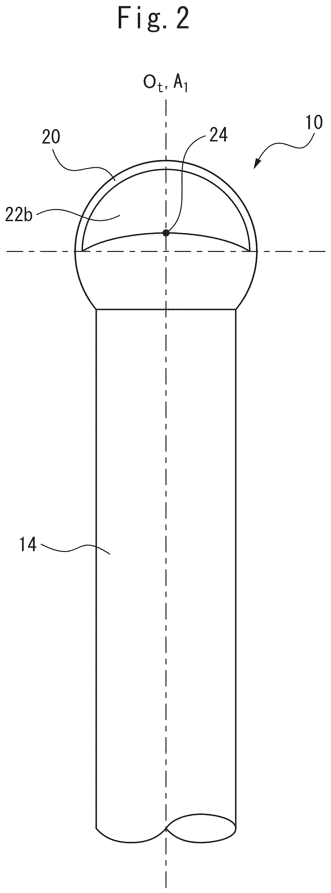

Referring to Figures 1-5, a first embodiment of the present invention will be described below.

In this disclosure, three orthogonal axes A₁, A₂, and A₃ are defined with respect to the center C of the spherical contactor 20 as the origin. One of the three axes, the axis A₁ in this embodiment, coincides with a central axis Ot of a touch probe 10. Further, in this disclosure, a plane which passes through the center C of the contactor 20 and is perpendicular to the axis A₂ is defined as plane P₁, and a plane which passes through the center C and is perpendicular to the axis A₁ is defined as plane P₂. A plane which passes through the center C and is perpendicular to both the plane P₁ and the plane P₂ is defined as plane P₃.

The plane P₁ is a plane including the axes A₁ and A₃, the plane P₂ is a plane including the axes A₂ and A₃, and the plane P₃ is a plane including the axes A₁ and A₂.

The touch probe 10 according to the first embodiment has a truncated cone-shaped body 12 which tapers along the central axis Ot toward the tip thereof. The body 12 defines a cylindrical mounting part 12a at a rear end or a proximal end thereof, and a support shaft 14 extending along the central axis Oₜ is coupled to a tip or a distal end of the body 12. A spherical contactor 20 having a notched part 22 is provided at a tip of the support shaft 14.

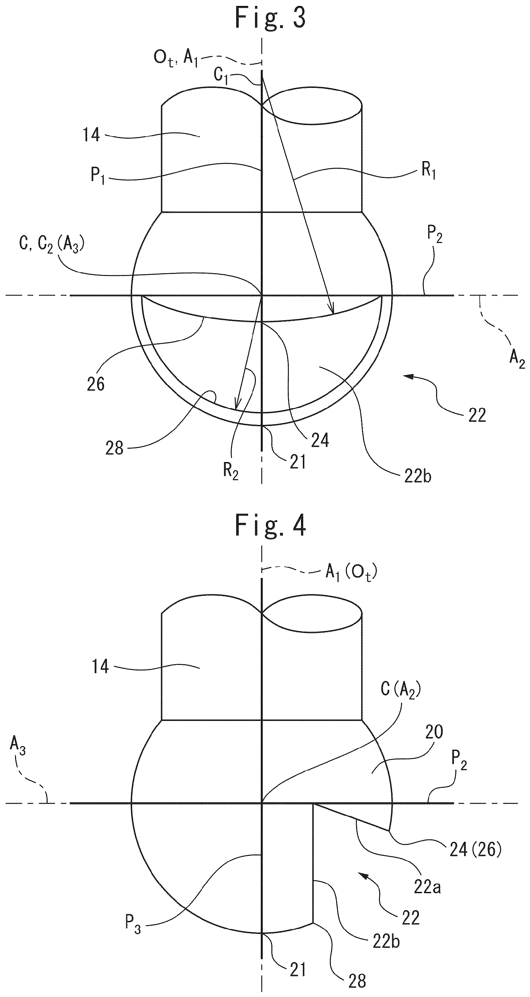

The notched part 22 is defined by a base side inner surface 22a and a tip side inner surface 22b, and is formed symmetrically with respect to the plane P₁ including the axis A₁ (central axis Ot) and the axis A₃. In particular, the base side inner surface 22a is inclined inwardly from the outer surface of the contactor 20 in a direction away from the tip of the touch probe 10. The base side inner surface 22a may be a flat surface or a curved surface. The contactor 20 defines an abutment part 24 which is a protrusion formed by the notched part 22. The abutment part 24 is a portion in the inner surface of the notched part 22 farthest in the direction of the axis A₁ from the plane P₂ perpendicular to the axis A₁ within a range possible to face the measurement object in the direction of the axis A₁. The abutment part 24 shown in Figures 3 and 4 can also be expressed that it is formed on an edge defining the opening of the notched part. The abutment part 24 can also be expressed that it is formed on an intersection line between a portion of the inner surface of the notched part facing the object to be measured in a measurement direction and the outer surface of the contactor.

In this embodiment, the opening of the notched part 22 is defined by a base side edge 26 and a tip side edge 28. Each of the base side edge 26 and the tip side edge 28 is formed in an arc shape bulging toward the tip of the touch probe 10 in a side view seen in the direction of the axis A₃. A center C₁ of the arc defining the base side edge 26 is located on the axis A₁. A center C₂ of the arc defining the tip side edge 28 is located on the axis A₁. In this embodiment, the center C₂ of the tip side edge 28 coincides with the center C of the contactor 20. The abutment part 24 is a portion on the base side edge 26 farthest in the direction of the axis A₁ from the plane P₂ perpendicular to the axis A₁ within a range possible to face the measurement object in the direction of the axis A₁.

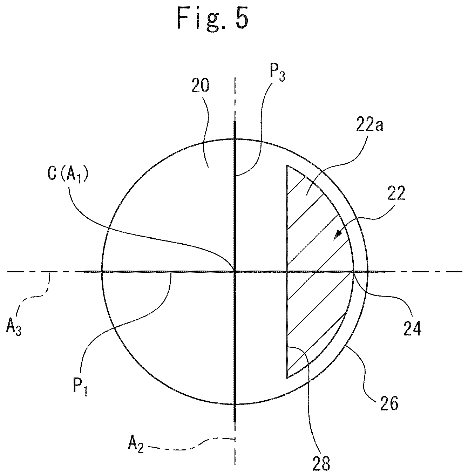

In this embodiment, as shown in Figure 5, the range indicated by the diagonal lines in the base side inner surface 22a is the portion possible to face the measurement object in the direction of the axis A₁. In addition, since the base side inner surface 22a is inclined inwardly from the outer surface of the contactor 20 in the direction away from the tip of the touch probe 10, the portion on the intersection line, between a portion in the base side inner surface 22a possible to face the measurement object and the outer surface of the contactor 20, farthest from the plane P₂ in the direction of the axis A₁, provides the abutment part 24. In this embodiment, the abutment part 24 is the intersection point between the base side edge 26 and the plane P₁. The abutment part 24 may be formed in a portion which does not coincide with the base side edge 26 by providing a protrusion, extending in the direction of the axis A₁, on a portion in the base side inner surface 22a possible to face the measurement object.

In addition, the axis A₁ does not necessarily have to coincide with the central axis Oₜ. In this case, the support shaft 14 may be connected obliquely relative to the axis A₁, or the support shaft 14 may have a right-angled shape.

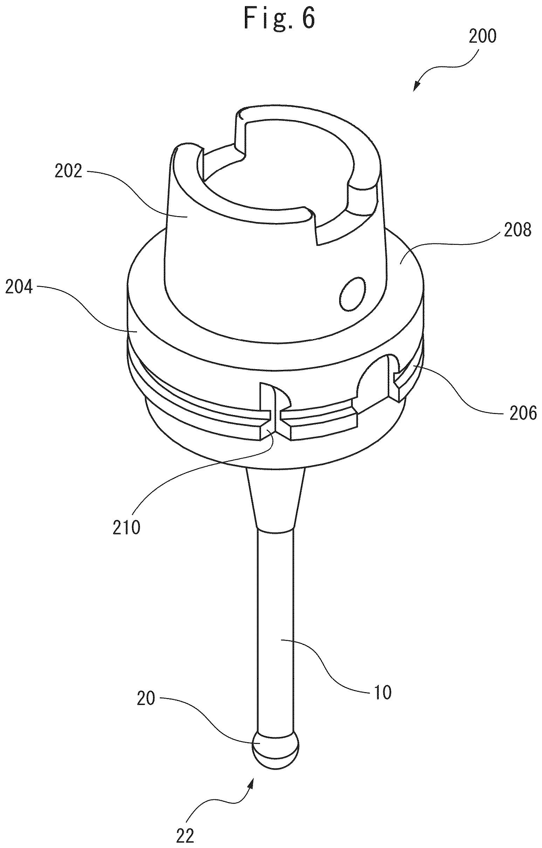

The mounting part 12a can be inserted, for example, in an insertion hole (not shown) of a tool holder 200 shown in Figure 6. In Figure 6, the tool holder 200 has a tapered shank 202 configured to be inserted into a tapered hole (not shown) formed at a distal end of a spindle of a measuring device such as a three-dimensional measuring machine (not shown) or a machine tool (not shown), a flange 204 having an abutment surface 208 configured to abut against a distal end face of the spindle, a circumferential groove 206 formed in the outer circumferential surface of the flange 204, and a V-notch 210 as a recess for identifying the rotation phase. The tool holder 200 also has a detection section (not shown) configured to detect that the contactor has come into contact with a measurement object, and a transmission unit (not shown) configured to output and transmit a touch signal when the detection section detects the contact.

Accordingly, the touch probe 10 can be attached to the distal end of the spindle of a three-dimensional measuring machine or a machine tool using the tool holder 200 by an automatic changer (not shown). The touch probe 10 may also be manually attached directly to the distal end of the spindle of a three-dimensional measuring machine or a machine tool by an operator without using a tool holder.

While a two-face constraint type tool holder 200 conforming to the HSK standard is shown as an example of the tool holder 200, in the present invention, the tool holder may be a tool holder having a 7/24 taper shank shape or a tool holder having a 1/10 taper hollow shank shape.

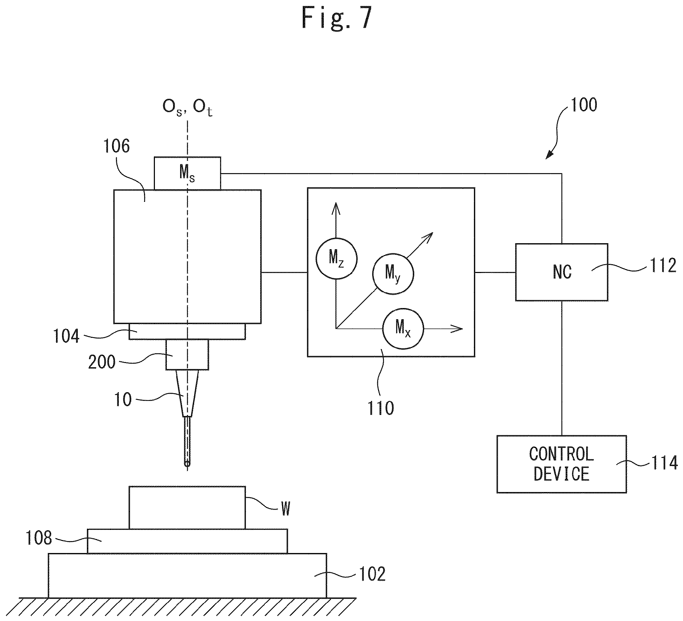

With reference to Figure 7, an example of the measuring device is shown. The measuring device 100 may be, for example, a three-dimensional measuring machine or a machine tool. The measuring device 100 includes a bed 102 as a base, a spindle head 106 configured to support a spindle 104 for rotation around a central axis Oₛ, a table 108, provided on the bed 102 so as to face the spindle 104, for placing and fixing a workpiece W thereon, a feed device 110 for moving the spindle head 106 and the table 108 relatively to each other in three orthogonal axial directions of X-, Y-, and Z-axes, an NC device 112 for controlling the feed device 110, and a control device 114 for the measuring device 100. The NC device 112 controls an X-axis motor Mₓ, a Y-axis motor M_{y}, and a Z-axis motor M_{z} of the feed device 110. When the measuring device 100 is a machine tool, the NC device 112 can further control a drive motor Mₛ for the spindle 104.

The control device 114 can be composed of a computer including a CPU (Central Processing Unit), a memory device such as a RAM (random access memory) or a ROM (read-only memory), a storage device such as an HDD (hard disk drive) or an SSD (solid-state drive), input/output ports, and bidirectional busses connecting these components to each other, as well as associated software. The control device 114 may be configured by software as a part of the NC device 112.

The control device 114 may be configured to provide a measurement program to the NC device 112 and instruct the NC device 112 to run the measurement program. In addition, if the measuring device 100 is equipped with a touch probe changing device (not shown), the control device 114 may control the touch probe changing device. In the case where the measuring device 100 is a machine tool, the touch probe changing device may be constituted by a tool changer.

While the touch probe 10 is inserted into a mounting hole (not shown) formed in the distal end of the spindle 104 via the tool holder 200 in Figure 7, the touch probe 10 may be directly attached to the spindle 104 by inserting the mounting part 12a into the mounting hole. When the touch probe 10 is attached to the spindle 104, the central axis Oₜ of the touch probe 10 coincides with the central axis Oₛ of the spindle 104.

Furthermore, when the contactor 20 of the touch probe 10 comes into contact with a measurement object such as the workpiece W, the touch probe 10 can detect the contact by the detection section and transmission unit, output and transmit a touch signal. In Figure 7, the touch signal is transmitted to the control device 114 by a wireless or wired communication device (not shown). When the control device 114 receives the touch signal, i.e., when the touch probe 10 comes into contact with the workpiece W as the measurement object, it receives X, Y, and Z coordinate information from the NC device 112 indicating the relative positional relationship of the spindle and/or table, and can obtain the position or dimension of the measurement object based on the coordinate values.

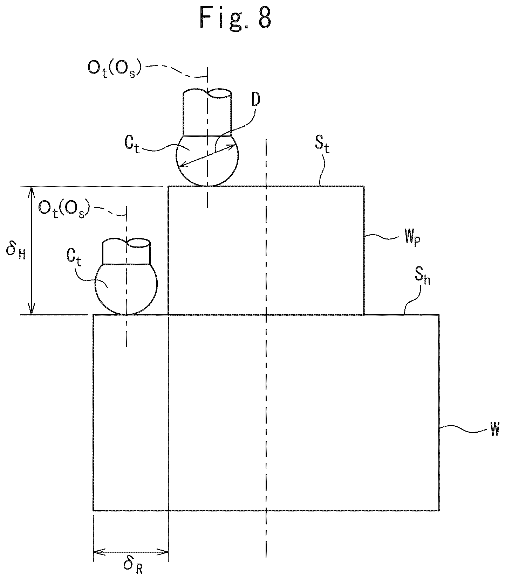

An operation of this embodiment will be described below. As shown in Figure 8, when measuring the height δ_{H} from the shoulder Sₕ to the top surface Sₜ of a workpiece W having a shoulder Sₕ and a top surface St, if the width δ_{R} of the shoulder Sₕ is larger than the diameter D of the contactor Cₜ, a touch probe having a conventional spherical contactor Cₜ can be used. In this case, the tip of the contactor Cₜ is brought into contact with the top surface Sₜ and shoulder Sₕ of the workpiece W, and the height δ_{H} is calculated by calculating the difference between the coordinate values in the direction of the central axis Oₜ, or the difference between the Z coordinate values in the measuring device 100.

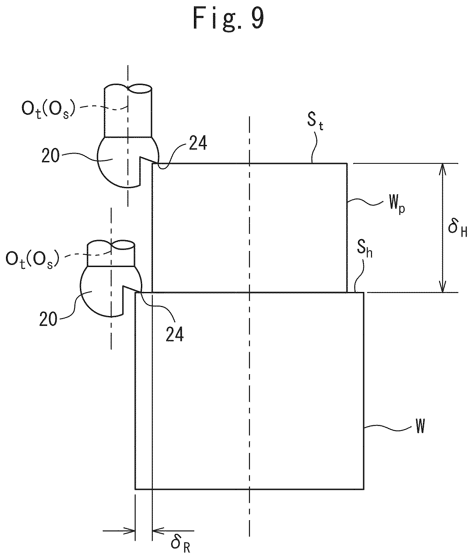

However, when the width δ_{R} of the shoulder Sₕ is smaller (narrower) than the diameter of the contactor as shown in Figure 9, in a conventional spherical touch probe, the contactor to be brought into contact with the portion of the workpiece W to be measured interferes with the top surface Sₜ or a wall extending vertically from the outer edge of the top surface Sₜ so that it is unable to come into contact with the shoulder Sₕ, and therefore it is unable to measure the height δ_{H}.

In contrast, in the touch probe 10 of this embodiment, the contactor 20 has an abutment part 24 on the base side inner surface 22a facing the workpiece W, i.e., the object to be measured, in the direction of the axis A₁, the direction along which the touch probe 10 is moved for measurement (measurement direction), among the inner surfaces forming the notched part 22. Therefore, in measurement, the touch probe 10 can be moved in the direction of the axis A₁, i.e., the measurement direction, so that the abutment part 24 contacts with the desired measurement target portion of the workpiece W, i.e., the shoulder Sₕ in Figure 9, without occurring unintended contact or interfere between the touch probe 10, including other portions of the contactor 20, and the workpiece W or a jig. In other words, in the touch probe 10 according to this embodiment, providing the notched part 22 in the contactor 20 enables the abutment part 24 to come into contact with the shoulder Sₕ of the workpiece W in the measurement without any portions of the contactor 20 other than the abutment part 24 interfering with the workpiece W. In the embodiment shown in Figure 9, the workpiece W is composed of a first portion, the upper side in the drawing, and a second portion, the lower side in the drawing, which has a larger shape than the first portion, so as to define a shoulder Sₕ as a difference in shape at the boundary between the first portion and the second portion.

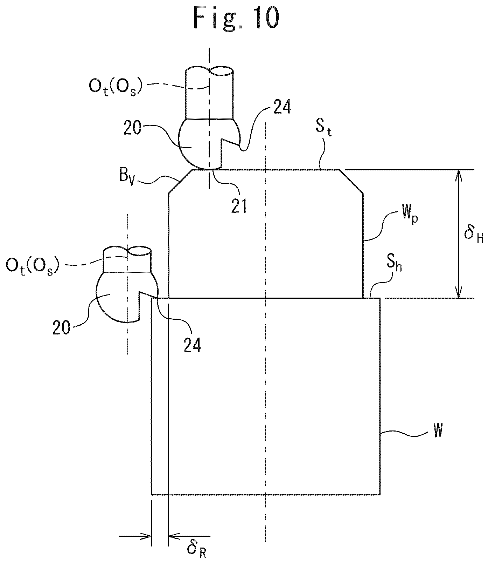

Further, when a chamfered portion Bᵥ is provided on a protruding portion Wₚ of the workpiece W as shown in Figure 10, the coordinate in the direction of the axis A₁ of the top surface Sₜ of the workpiece W can be obtained by bringing a tip 21, located at the tip end in the measurement direction in the spherical outline of the contactor 20, into contact with the measurement target portion of the workpiece W. In other words, it is possible to select for measurement which part of the contactor is to be brought into contact with the measurement target portion of the workpiece W, depending on the respective shapes of the workpiece W and the touch probe, and the relative positional relationship between the workpiece W and the touch probe. This selection may be made based on the judgment of the operator. Alternatively, the control device 114 may automatically select which part of the contactor is to be brought into contact with the measurement target portion of the workpiece W to perform the measurement, in a configuration in which the control device 114 includes a storage unit for storing model information of the workpiece W and the touch probe, and a determination unit configured to check whether or not interference between the workpiece W and the touch probe occurs, based on the model information of the workpiece W and the model information of the touch probe, according to the coordinates of the measurement target portion instructed to measure, and then determine whether the tip or the abutment part should be used for measurement.

The determination unit may further be configured to issue an alarm if it determines that it is not possible to measure by neither the tip nor the abutment part as a result of checking whether interference occurs. The determination unit may further include a determination criterion storage unit configured to store a determination criterion for determining that measurement should be preferentially performed by the tip if the shape of the measurement target portion allows either the tip or the abutment part to measure. Since the abutment part has an edge shape due to being configured by the notched part, if the tip and the abutment part come into contact with a measurement target portion at a same feed speed, the contact by the abutment part is more likely to generate a contact mark than that by the tip. Therefore, if the shape allows either the tip or the abutment part to measure, it can be said that the measurement by the tip is preferable in terms of the likelihood of a contact mark being generated and the reduction of measurement time.

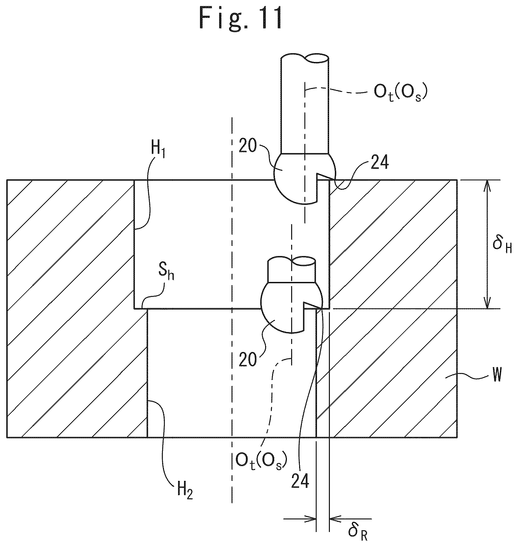

Furthermore, when the workpiece W has a hole having a large diameter portion H₁ and a small diameter portion H₂ as shown in Figure 11, the touch probe 10 according to this embodiment can also be used to measure the position and the depth δ_{H}, from the surface of the workpiece W, of a shoulder Sₕ formed at a boundary between the large diameter portion H₁ and the small diameter portion H₂.

While the contactor 20 has one abutment part 24 protruding in one measurement direction in the embodiment described above, the present invention is not limited to this, and the contactor may have a plurality of abutment parts protruding in a plurality of different measurement directions.

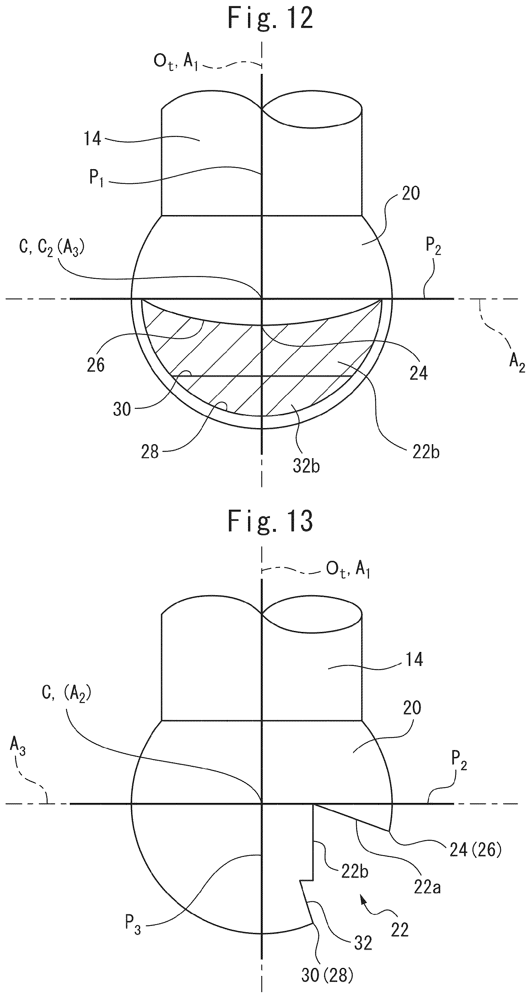

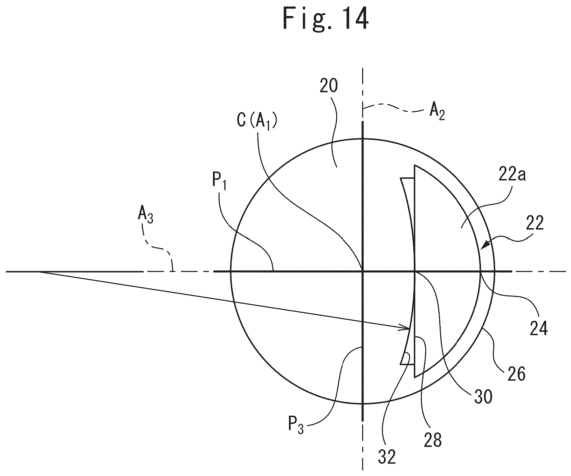

A second embodiment of the present invention will be described with reference to Figures 12 to 14. In Figures 12 to 14, components similar to those in the embodiment of Figures 3 to 5 are indicated by the same reference symbols, and duplicated descriptions will be omitted below.

In the second embodiment, the tip side inner surface 22b is formed by a plane approximately parallel to the plane P₃. Further, a sub-notched part 32 is formed in the tip side inner surface 22b. The sub-notched part 32 has an inner surface bulging outward of the contactor in a direction parallel to the axis A₃, and thus a second abutment part 30 is formed on the tip side edge portion 28.
Providing the axis A3 as the measurement direction, the second abutment part 30 is a portion on the tip side inner surface 22b located at a position farthest from the plane P₃ which passes through the center C of the contactor and is perpendicular to the axis A3, i.e., the measurement direction. The sub-notched part 32 may be configured so that the second abutment part 30 contact with the measurement target portion at a point. The notched part 22 and the sub-notched part 32 may be provided at a plurality of locations at different phases around the axis A₁.

Further, while the notched part 22 is a notch that has an acute central angle when the contactor is viewed from the direction of the axis A₂ in the embodiment described above, the present invention is not limited to this, and the notched part may have an obtuse central angle.

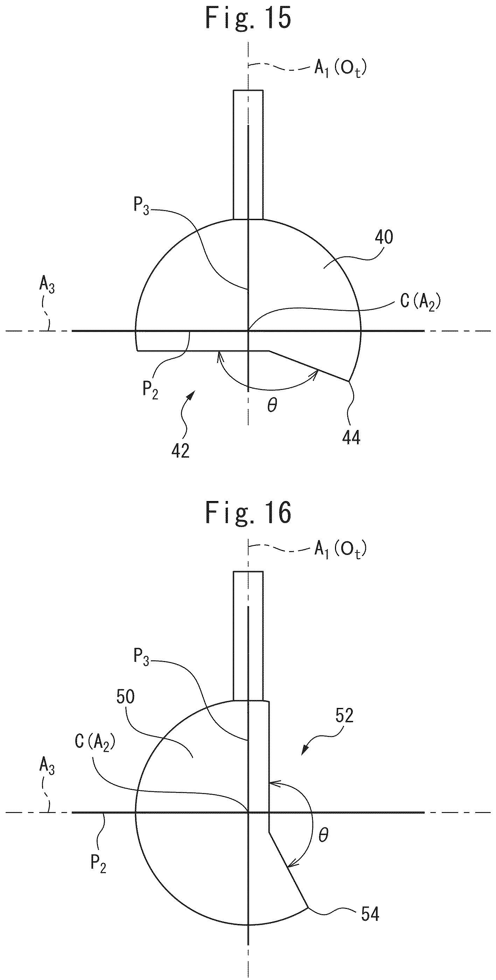

In Figure 15, a notched part 42 has an obtuse central angle θ when a contactor 40 is viewed from the direction of the axis A₂. The notched part 42 forms an abutment part 44. The abutment part 44 is a portion on the outline of the contactor 40 which passes through the center C of the contactor 40 and is located at the farthest position from the plane P₂ perpendicular to the axis A₁ that defines the measurement direction.

16 also has an obtuse central angle θ. The notched part 52 forms an abutment part 54. The abutment part 54 is a portion on the outer surface of the contact 50 that passes through the center C of the contact 50 and is located at the farthest position from a plane P₃ perpendicular to the axis A₃ that defines the measurement direction.

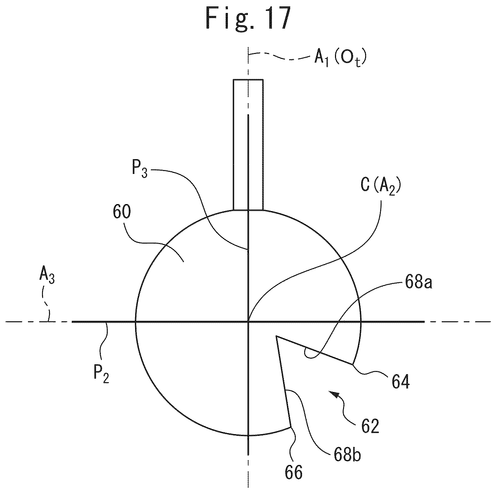

Furthermore, in the second embodiment shown in Figures 12 to 14, the tip side inner surface 22b of the notched part 22 is formed approximately parallel to the plane P₃, and the second abutment part 30 is formed by providing the sub-notched part 32 on the tip side inner surface 22b. However, the present invention is not limited to this, and as shown in Figure 17, a base side inner surface 68a and a tip side inner surface 68b of a notched part 62 are inclined with respect to the plane P₂ perpendicular to the axis A₁ and the plane P₃ perpendicular to the axis A₃, respectively, to form first and second abutment parts 64 and 66 on a protrusion formed by the notched part 62.

The abutment part and the second abutment part may be subjected to R-chamfering or honing in the areas which come into contact with the workpiece W.

The shape of the notched part is not limited. For example, while the notched part 22, shown in Figures 3 and 4, is opened from the tip side of the contactor 20 in the direction of the axis A₁ which defines the measurement direction, the notched part 22 may not reach the plane P₂ which is perpendicular to the axis A₁ and passes through the center of the contactor 20. The spherical outer shape intersecting with the plane P₂ is ensured around the entire circumference of the contactor 20, and therefore the touch probe of the present invention can as well measure shapes which can be measured with a conventional spherical outer shape, such as an inner diameter or a wall surface of a hole in a positional relationship perpendicular to plane P₂. Further, determining the shape of the notched part 22 so that the abutment part 24 shown in Figures 3 and 4 can be positioned further toward the outer periphery of the contactor in the direction of the axis A₃ reduces the distance in the direction of the axis A₃ between the abutment part 24 and a portion where the outline of the contactor and the plane P₂ intersect, whereby enabling to measure a target portion having a narrower width. The abutment part or the second abutment part may be formed on the edge which defines the opening of the spherical outline notched part of the contactor, or may be formed in the inner surface of the notched part instead of on the edge. Furthermore, providing a notched part at a portion which does not coincide with the tip 21, as in the abutment part 24 shown in Figures 3 and 4, ensures the tip 21, whereby enabling to measure not only by the abutment part but also by the spherical outline. The effect of the present invention can be obtained as long as the shape of the notched part is configured so that the abutment part can contact and measure the workpiece without while avoiding interference between the contactor and the workpiece, and therefore various shapes of the notched part can be employed within that scope.

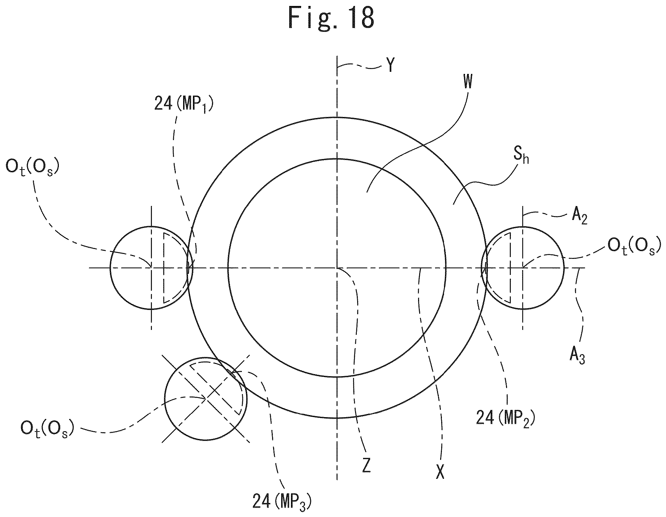

The phase of the abutment part or the second abutment part may be adjusted by a touch probe phase adjustment unit. For example, as shown in Figure 18, a plurality of measurement target portions in a plane shoulder Sₕ of a workpiece W can be measured. The measuring device is provided with a touch probe phase adjustment unit, which can adjust the phase of the contact part, i.e., the phase of the contact part when the touch probe is viewed in the direction of axis A1. The measuring device can measure a plurality of measurement target portions without interferences at their respective positions by the touch probe phase adjustment unit and the feed device. For example, when measurements are instructed at the measurement position MP₁ and the measurement position MP₂ in Figure 18, the touch probe phase adjustment unit may rotate the touch probe 10 to change the phase of the touch probe 10 by 180° between the measurement position MP₁ and the measurement position MP₂. When the measuring device is a machine tool, the touch probe phase adjustment unit may be provided in the control device 114 as a Cs-axis function, which is a function capable of controlling the spindle phase by controlling the drive motor Mₛ of the spindle 104 shown in Figure 7. As a prerequisite for the touch probe phase adjustment unit, it is necessary to control the attachment relationship between the touch probe and the holder, the mounting relationship between the spindle and the holder, and the zero point in the touch probe phase adjustment unit. The touch probe phase adjustment unit may be configured so that an operator adjusts manually, or may be configured to automatically adjust to an appropriate phase for each measurement target portion based on automatically recognized shape of the measurement target portion by the control device based on model information of the measurement object.

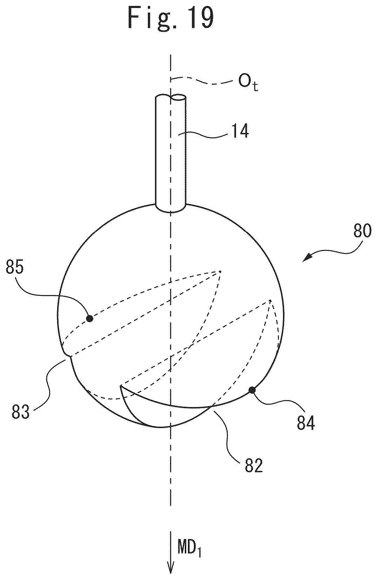

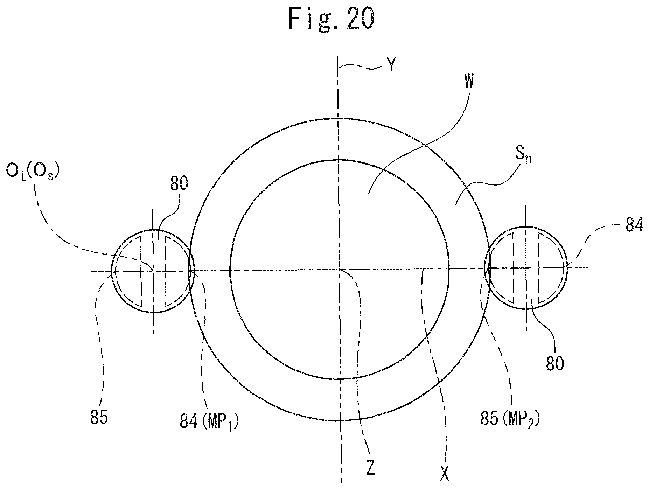

The contactor may include a plurality of abutment parts protruding in the same measurement direction. A plurality of measurement target portions can be measured without the above-mentioned touch probe phase adjustment unit. Figure 19 shows a contactor 80 having abutment parts 84 and 85 protruding in the same measurement direction MD₁. According to the contactor 80, as shown in Figure 20, the measurement position MP₁ can be measured by an abutment part 84, and the measurement position MP₂ located on the opposite side to the measurement position MP₁ relative to the center of the workpiece W can be measured by an abutment part 85. At that time, while the measuring device moves the touch probe by the feed device, it is not necessary to adjust the touch probe phase. It should be noted that in Figure 19, a contactor having two abutment parts arranged evenly is shown, but it is not limited to this configuration. For example, four abutment parts may be arranged evenly or unevenly. The shape of the notched part can be freely set according to the required number, arrangement, and shape of the abutment parts.

### DESCRIPTION OF REFERENCE SIGNS

- 10: Touch Probe
- 12: Main Body
- 12a: Mounting Portion
- 14: Support Shaft
- 20: Contactor
- 21: Tip
- 22: Notched Part
- 22a: Base End Inner Surface
- 22b: Tip Side Inner Surface
- 24: Abutment Part
- 26: Tip side edge
- 28: Base side edge
- 30: Second Abutment Part
- 32: Sub-Notch
- 40: Contactor
- 42: Notched Part
- 44: Abutment Part
- 50: Contactor
- 52: Notched Part
- 54: Abutment Part
- 60: Contactor
- 62: Notched Part
- 64: Abutment Part
- 66: Second Abutment Part
- 68a: Base End Inner Surface
- 68b: Tip End Inner Surface
- 80: Contactor
- 82: Notched Part
- 83: Notched Part
- 84: Abutment Part
- 85: Abutment Part
- 100: Measuring Device
- 102: Bed
- 104: Spindle
- 106: Spindle Head
- 108: Table
- 112: NC Device
- 114: Control Device
- 200: Tool Holder
- 202: Tapered Shank
- 204: Flange
- 206: Circumferential Groove
- 208: Contact Surface
- 210: V-Notch

## Claims

1. A touch probe used for measuring a position or dimension of a measurement object by being attached to a measuring device, and moving relative to the measurement object in a measurement direction so as to come into contact with the measurement object, the touch probe comprising:
a main body configured to be attached to the measuring device;
a support shaft provided on said main body; and
a contactor in the form of a spherical shape provided at a distal end the support shaft,
wherein the contactor includes an abutment part formed by a notched part to extend in the measurement direction.

2. The touch probe according to claim 1, wherein the contactor includes a plurality of protruding abutment parts corresponding to a plurality of different measurement directions.

3. The touch probe according to claim 1, wherein the contactor includes a plurality of abutment parts protruding in the same measurement direction.

4. A measuring device for measuring a position or dimension of a measurement object by moving the touch probe according to any one of claims 1 to 3 relative to the measurement object in a measurement direction so as to come into contact with the measurement object, comprising:
a spindle allowing the touch probe to be attached thereto;
a table allowing the measurement object to be placed thereon;
a feed axis for moving the spindle shaft and the table relative to each other; and
a control device for controlling the spindle, the table, and the feed axis.
